# FASCICULE DE BREVET EUROPEEN

(11) **EP 2 756 258 B1**
(45) Date de publication et mention de la délivrance du brevet: **16.11.2016**
(21) Numéro de dépôt: 12762332.0
(22) Date de dépôt: 11.09.2012
(51) Int. Cl.: F42B 4/04, A01M 27/00, F42B 3/103

(54) **PÉTARD PYROTECHNIQUE**
PYROTECHNISCHER ZÜNDER
PYROTECHNIC SQUIB

(30) Priorité: 12.09.2011 FR 1102764
(43) Date de publication de la demande: 23.07.2014
(73) Titulaire: Far Ouest, 22300 Lannion (FR)
(72) Inventeur: MILON, Christophe, F-22300 Lannion (FR)
(74) Mandataire: Benech, Frédéric
(86) Numéro de dépôt international: PCT/FR2012/000357
(87) Numéro de publication internationale: WO 2013/038073

(56) Documents cités:
- EP-A1- 0 458 074
- WO-A1-2011/044593
- DE-C- 545 750
- DE-U1- 29 608 586
- FR-A1- 2 897 510
- GB-A- 404 335
- GB-A- 691 873

## Description

La présente invention concerne un pétard pyrotechnique à allumage électrique du type comprenant une enveloppe allongée autour d'un axe de rétention d'un volume de poudre déterminé et une tête d'allumage de mise à feu de la poudre, ladite enveloppe étant munie d'un côté d'une extrémité fermée et de l'autre côté d'un bouchon de jonction avec un câble d'alimentation électrique de la tête d'allumage.

Elle trouve une application particulièrement importante bien que non exclusive dans le domaine des pétards pour piège à taupe et notamment pour piège à taupe comportant un dispositif de transmission du mouvement de l'animal pour commander mécaniquement un contacteur de mise à feu.

Mais d'autres applications comme par exemple l'utilisation d'un pétard de déclenchement dans le cadre d'activité foraine sont possibles.

On connaît déjà des pétards pyrotechniques à allumage électrique utilisés notamment dans le domaine de l'élimination de petits animaux.

Avec ce type de dispositif explosif, il existe des risques de blessures liés à la projection de portions de l'enveloppe lors de l'explosion, dans le cas ou l'utilisateur ne respecte pas les consignes de sécurité.

On connaît également (EP 0 458 074), un pétard pyrotechnique à allumage électrique dont la tête d'allumage ne fonctionne pas toujours de façon efficace.

Pour pallier ces inconvénients l'invention part de l'idée de concevoir une enveloppe qui reste solidaire du câble d'alimentation électrique de la tête d'allumage lors de l'explosion. Le câble d'alimentation restant en effet toujours solidaire du boîtier d'alimentation lui même, fixé dans le sol et/ou non susceptible d'être projeté il n'y a plus de possibilité d'accidents.

Pour ce faire la présente invention propose un pétard pyrotechnique répondant mieux que ceux antérieurement connus aux exigences de la pratique notamment en ce que l'enveloppe est conçue pour s'ouvrir en banane lors de l'explosion et dès lors limiter les risques de blessures puisque la déformation de l'enveloppe évite tout arrachage et projection de morceaux.

Dans ce but l'invention propose essentiellement un pétard pyrotechnique à allumage électrique selon la revendication 1. Le pétard comprenant une enveloppe allongée autour d'un axe de rétention d'un volume de poudre déterminé, une tête d'allumage de mise à feu de la poudre, ladite enveloppe étant munie d'un coté d'une extrémité fermée et de l'autre coté d'un bouchon de jonction avec un câble d'alimentation électrique de ladite tête d'allumage, l'enveloppe comporte une rainure externe longitudinale continue en forme de U qui fait le tour de l'enveloppe, les extrémités des branches du U étant situées du coté du bouchon de jonction avec le câble et le fond du U du coté de l'extrémité fermée.

Grâce à cette rainure, qui constitue une partie plus fragile et frangible de l'enveloppe, cette dernière va se déchirer préférentiellement lors de l'explosion, la déchirure évitant l'éclatement et/ou l'arrachage de parties de l'enveloppe comme observé avec les pétards de l'art antérieur. L'extrémité fermée de l'enveloppe comprend des moyens de centrage de la tête d'allumage dans l'enveloppe à l'intérieur de la poudre, les moyens de centrage comportent au moins trois ailettes réparties angulairement autour de l'axe de l'enveloppe, formant entonnoir de guidage de la tête dans lequel elle s'insère.

Dans des modes de réalisation avantageux, on a de plus recours à l'une et/ou à l'autre des dispositions suivantes :
- Les extrémités des branches de la rainure se terminent dans des plaquettes de renfort de l'enveloppe en saillie par rapport à la face externe de l'enveloppe.
De tels renforts consolident l'attache des deux portions d'enveloppe au bouchon et au câble ;
- la paroi de l'enveloppe étant d'épaisseur e, la profondeur de la rainure est comprise entre e/2 et 2/3 e. Ou encore l'épaisseur e' de matière restante en fond de rainure est comprise entre e/2 et e/3 ;
- e est compris entre 1,30 mm et 1,45 mm, par exemple entre 1,34 et 1,43 mm ;
- l'enveloppe est en polyéthylène de dureté shore-D comprise entre 50 et 60, par exemple entre 52 et 58.
A noter que le fait que l'extrémité fermée de l'enveloppe comprenne des moyens de centrage de la tête d'allumage dans l'enveloppe à l'intérieur de la poudre, permet une grande régularité des explosions.
- Elle comporte quatre ailettes réparties angulairement et symétriquement par rapport à l'axe;
- chaque ailette est solidaire de la paroi interne de l'enveloppe et est en forme de lame dont l'arête dirigée vers l'axe présente un extrémité oblique divergente vers l'extérieur par rapport audit axe ;
- les moyens de centrage sont agencés pour centrer ladite tête d'allumage à un emplacement déterminé au milieu de la poudre pour que la quantité de poudre autour de ladite tête soit égale de chaque coté de ladite tête ;
- le bouchon comprend une pastille de colle s'étendant entre le cinquième et la moitié de la longueur de l'enveloppe en vis à vis d'une portion de ladite enveloppe dénuée de rainure.

L'invention sera mieux comprise au vu de la description qui suit d'un mode de réalisation donné ci-après à titre d'exemple non limitatif.

Celle-ci se réfère aux figures qui l'accompagnent dans lesquelles :
La figure 1 est une vue en perspective d'un mode de réalisation d'un pétard selon l'invention.
La figure 2 est une vue en coupe longitudinale partielle, en dehors de la rainure, de l'extrémité fermée de l'enveloppe du pétard de la figure 1 faisant apparaître les moyens de centrage de la tête d'allumage
La figure 3 illustre un mode de réalisation des extrémités des branches au niveau du bouchon avec plaquettes de renfort.
La figure 4 est une vue générale en perspective éclatée du pétard de la figure 1
La figure 5 montre le pétard de la figure 1 avec son enveloppe éclatée en deux , après explosion, les morceaux d'enveloppe restant solidaires de l'extrémité fixée au câble d'alimentation de la tête d'allumage.

Dans la suite de la description on utilisera les mêmes numéros de référence pour désigner les mêmes éléments.

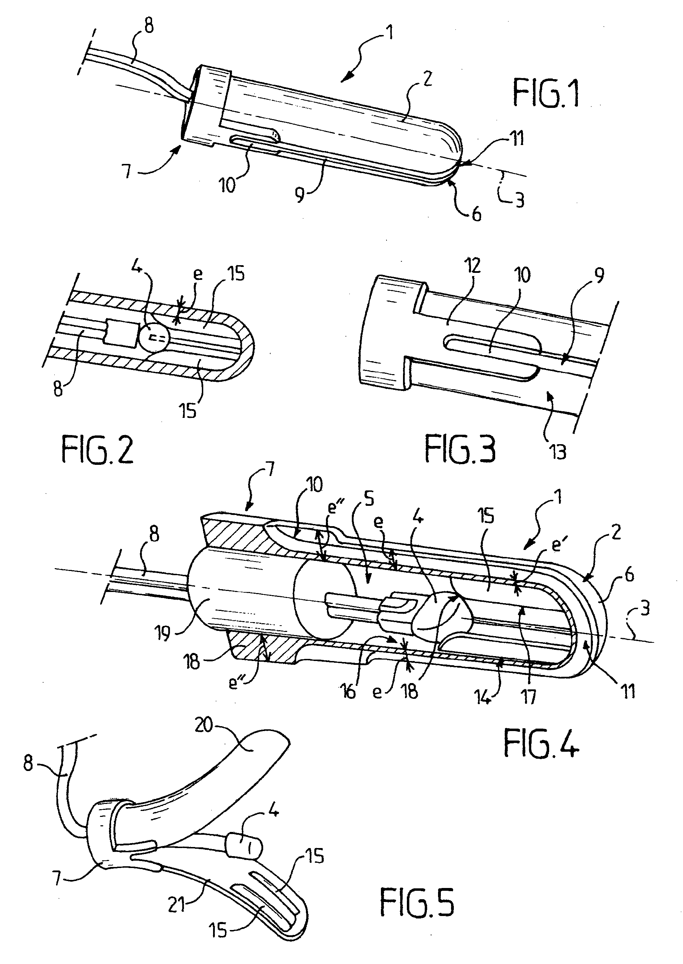

La figure 1 et la figure 4 montrent un pétard pyrotechnique 1 à allumage électrique comprenant une enveloppe cylindrique 2 allongée autour d'un axe 3.

Le pétard comprend une tête d'allumage 4 connue en elle même, de mise à feu de la poudre, située dans le volume interne 5 sensiblement cylindrique de l'enveloppe.

L'enveloppe est munie d'un côté d'une extrémité fermée 6 et de l'autre côté d'un bouchon 7 d'étanchéité et de jonction avec un câble 8 d'alimentation électrique de la tête d'allumage.

L'enveloppe 2 comporte une rainure 9 en forme de U, qui fait le tour de l'enveloppe, les extrémités 10 des branches du U étant situées du côté du bouchon 7 et le fond 11 du côté de l'extrémité fermée 6. (voir également la figure 3).

Les extrémités 10 des branches de la rainure 9 se terminent dans des plaquettes 12 de renfort de l'enveloppe raccordées à une portion périphérique cylindrique annulaire en saillie par rapport à la face externe 13 de l'enveloppe.

L'épaisseur e" de cette portion périphérique et des plaquettes est par exemple 1,5 à 2 fois celle de l'enveloppe.

Celle-ci est par exemple formée par moulage ou injection en polyéthylène de dureté shore-D comprise entre 50 et 60 et plus particulièrement de dureté 54.

La rainure quant à elle fait par exemple 0,5 mm de profondeur correspondant à la moitié de l'épaisseur de 1,4 mm de la paroi (cf. épaisseur e sur la figure 2), et entre 0,5 mm et 1,5 mm de largeur, par exemple 1 mm.

Elle présente par exemple une section transversale carrée, rectangulaire, à fond arrondi ou formant un angle, par exemple de 120°.

La longueur du pétard est par exemple de 3 cm.

Selon le mode de réalisation plus particulièrement décrit ici, l'extrémité fermée de l'enveloppe 6 comprend des moyens 14 de centrage dans l'enveloppe de la tête d'allumage 4, à l'intérieur de la poudre présente dans le volume 5.

Ces moyens 14 de centrage comprennent quatre ailettes 15 en forme de lamelles de 0,5 mm d'épaisseur réparties angulairement et symétriquement par rapport à l'axe 3 de l'enveloppe et formant une sorte d'entonnoir de guidage de la tête dans laquelle elle s'insère.

Plus précisément chaque ailette est solidaire de la paroi interne 16 de l'enveloppe et présente une arête 17 dirigée vers l'axe qui présente une extrémité oblique 18 divergente vers l'extérieur par rapport à l'axe 3.

Il est ainsi ménagée des formes convergentes qui vont permettre le guidage de la tête d'allumage 4 avec qui elle va pouvoir venir en contact.

Les lames, l'enveloppe ainsi que le bouchon 7 ménagent un volume 5 de poudre, agencés pour que la tête d'allumage se situe à un emplacement déterminé au milieu de la poudre, de sorte que la quantité de poudre située d'un côté de la tête dans l'axe longitudinal 3 soit sensiblement égale à la quantité de poudre située de l'autre côté de la tête.

Le bouchon comprend la portion d'extrémité périphérique, cylindrique 18 de l'enveloppe, de hauteur correspondante par exemple au quart de la longueur totale de l'enveloppe et une pastille de colle 19, sensiblement cylindrique par exemple de la colle thermo-fusible, qui autorise une bonne solidarisation avec le reste de l'enveloppe et une bonne fermeture étanche de l'enveloppe de ce côté, l'ensemble étant dimensionné pour une bonne résistance à la compression de l'explosion.

On a représenté sur la figure 5 un pétard après explosion. On voit que les deux parties 20 et 21 se sont écartées en forme d'épluchure de banane mais sont restées entièrement solidaires de la partie en bouchon 7 fixée au câble 8, la tête d'allumage 4 se présentant entre les deux un peu comme le pistil d'une fleur.

On va maintenant décrire le fonctionnement d'un pétard selon l'invention.

La quantité de poudre est calculée et l'épaisseur de la rainure est déterminée de façon à ce que l'ouverture de l'enveloppe se fasse de façon aisée lors de l'explosion (par exemple par essais et tests successifs à la portée de l'homme du métier). Les rainures de guidage permettent de placer la tête d'allumage au centre ce qui va entraîner une grande régularité de l'explosion de façon répétitive au niveau de la fabrication du pétard.

Les rapports d'épaisseur, le choix de la dureté de l'enveloppe et la forme de la rainure autorisent cet éclatement tout en maintenant l'ensemble fixé au câble.

Une fois ce dimensionnement effectué on allume le pétard, l'explosion va alors entraîner d'une part le choc qui va permettre notamment l'effet recherché par exemple celui de tuer une taupe dans son conduit et d'autre part compte tenu de la fragilisation de l'enveloppe de façon dirigée et précise, une ouverture en forme de banane de l'enveloppe sans projection.

Comme il va de soi et comme il résulte d'ailleurs de ce qui précède, la présente invention n'est pas limitée aux modes de réalisation plus particulièrement décrits. Elle en embrasse au contraire toutes les variantes et notamment celles où le pétard comporte une enveloppe non cylindrique, par exemple parallélépipédique.

## Revendications

1. Pétard pyrotechnique (1) à allumage électrique comprenant une enveloppe (2) allongée autour d'un axe (3) de rétention d'un volume de poudre déterminé, une tête d'allumage (4) de mise à feu de la poudre, ladite enveloppe étant munie d'un côté d'une extrémité fermée (6) et de l'autre côté d'un bouchon (7) de jonction avec un câble (8) d'alimentation électrique de ladite tête d'allumage, l'enveloppe comportant une rainure (9) externe, la rainure externe est longitudinale continue en forme de U qui fait le tour de l'enveloppe, les extrémités (10) des branches du U étant situées du côté du bouchon (7) de jonction avec le câble et le fond (11) du U du côté de l'extrémité fermée, **caractérisé en ce que** l'extrémité fermée (6) de l'enveloppe comprend des moyens (14) de centrage de la tête d'allumage dans l'enveloppe à l'intérieur de la poudre, et **en ce que** les moyens (14) de centrage comportent au moins trois ailettes (15) réparties angulairement autour de l'axe (3) de l'enveloppe, formant entonnoir de guidage de la tête dans lequel elle s'insère.

2. Pétard selon la revendication 1, **caractérisé en ce qu'**elle comporte quatre ailettes (15) réparties angulairement et symétriquement par rapport à l'axe (3).

3. Pétard selon la revendication 2, **caractérisé en ce que** chaque ailette (15) est solidaire de la paroi interne de l'enveloppe et est en forme de lame dont l'arête (17) dirigée vers l'axe présente une extrémité oblique (18) divergente vers l'extérieur par rapport audit axe.

4. Pétard selon l'une quelconque des revendications précédentes, **caractérisé en ce que** les moyens (14) de centrage sont agencés pour centrer ladite tête d'allumage à un emplacement déterminé au milieu de la poudre pour que la quantité de poudre autour de ladite tête soit égale de chaque côté de ladite tête.

5. Pétard selon selon l'une quelconque des revendications précédentes, **caractérisé en ce que** les extrémités (10) des branches de la rainure se terminent dans des plaquettes (12) de renfort de l'enveloppe en saillie par rapport à la face externe (13) de l'enveloppe.

6. Pétard selon l'une quelconque des revendications précédentes, **caractérisé en ce que** la paroi de l'enveloppe (2) étant d'épaisseur e, la profondeur de la rainure (9) est comprise entre e/2 et 2/3 e.

7. Pétard selon la revendication 6, **caractérisé en ce que** e est compris entre 1,30 mm et 1,45 mm.

8. Pétard selon l'une quelconque des revendications précédentes, **caractérisé en ce que** l'enveloppe (2) est en polyéthylène de dureté shore D comprise entre 50 et 60.

9. Pétard selon l'une quelconque des revendications précédentes, **caractérisé en ce que** le bouchon (7) comprend une pastille de colle (19) s'étendant entre le cinquième et la moitié de la longueur de l'enveloppe en vis à vis d'une portion de ladite enveloppe dénuée de rainure.

## Patentansprüche

1. Pyrotechnischer Knallkörper (1) mit elektrischer Zündung, umfassend eine längliche Hülle (2) um eine Achse (3) für den Rückhalt eines bestimmten Pulvervolumens, einen Zündkopf (4) für das Entzünden des Pulvers, wobei die Hülle auf einer Seite mit einem geschlossenen Ende (6) und auf der anderen Seite mit einem Stopfen (7) zur Verbindung mit einem Kabel (8) für die elektrische Versorgung des Zündkopfes versehen ist, wobei die Hülle eine Außennut (9) aufweist, wobei die Außennut länglich, ununterbrochen und U-förmig ist und um die Hülle umlaufend verläuft, wobei die Enden (10) der U-Schenkel auf der Seite des Stopfens (7) zur Verbindung mit dem Kabel und der Boden (11) des U auf der Seite des geschlossenen Endes angeordnet sind, **dadurch gekennzeichnet, dass** das geschlossene Ende (6) der Hülle Mittel (14) zum Zentrieren des Zündkopfes in der Hülle innerhalb des Pulvers umfasst und die Zentrierungsmittel (14) mindestens drei Flügel (15) aufweisen, die winkelig um die Achse (3) der Hülle verteilt sind und einen Trichter für die Führung des Kopfes bilden, in den dieser eingreift.

2. Knallkörper nach Anspruch 1,
**dadurch gekennzeichnet,**
**dass** er vier Flügel (15) aufweist, die winkelig und symmetrisch zur Achse (3) verteilt sind.

3. Knallkörper nach Anspruch 2,
**dadurch gekennzeichnet,**
**dass** jeder Flügel (15) mit der Innenwand der Hülle fest verbunden ist und die Form eines Blatts aufweist, dessen zur Achse gerichtete Kante (17) ein abgeschrägtes Ende (18) aufweist, die in Bezug auf die Achse nach außen absteht.

4. Knallkörper nach einem beliebigen der vorhergehenden Ansprüche,
**dadurch gekennzeichnet,**
**dass** die Zentrierungsmittel (14) angeordnet sind, um den Zündkopf an einer bestimmten Stelle in der Mitte des Pulvers zu zentrieren, damit die Pulvermenge um den Kopf beidseitig des Kopfes gleich ist.

5. Knallkörper nach einem der vorhergehenden Ansprüche,
**dadurch gekennzeichnet,**
**dass** die Enden (10) der Schenkel der Nut in Plättchen (12) zur Verstärkung der Hülle enden, die in Bezug auf die Außenseite (13) der Hülle vorragen.

6. Knallkörper nach einem der vorhergehenden Ansprüche,
**dadurch gekennzeichnet,**
**dass** die Wand der Hülle (2) eine Dicke e aufweist und die Tiefe der Nut (9) zwischen e/2 und 2/3 e liegt.

7. Knallkörper nach Anspruch 6,
**dadurch gekennzeichnet,**
**dass** e zwischen 1,30 mm und 1,45 mm liegt.

8. Knallkörper nach einem der vorhergehenden Ansprüche,
**dadurch gekennzeichnet,**
**dass** die Hülle (2) aus Polyethylen mit einer Shore-Härte D zwischen 50 und 60 besteht.

9. Knallkörper nach einem der vorhergehenden Ansprüche,
**dadurch gekennzeichnet,**
**dass** der Stopfen (7) einen Klebepunkt (19) aufweist, der sich zwischen einem Fünftel und der Hälfte der Hüllenlänge gegenüber einem Abschnitt der Hülle ohne Nut erstreckt.

## Claims

1. Pyrotechnic squib (1) which is ignited electrically and comprises an elongated envelope (2) around an axis (3) for holding a predetermined volume of powder, an igniter head (4) for igniting the powder, said envelope being provided on one side with a closed end (6) and on the other side with a connecting plug (7) with an electric power cable (8) for said igniter head, the envelope having an external groove (9), the external groove is longitudinal and continuous in the form of a U which runs around the envelope, the ends (10) of the limbs of the U being situated on the side of the connecting plug (7) with the cable and the bottom (11) of the U on the side of the closed end,
**characterised in that**
the closed end (6) of the envelope comprises means (14) for centring the igniter head in the envelope inside the powder,
and **in that** the means (14) for centring comprise at least three fins (15) distributed angularly around the axis (3) of the envelope, forming a funnel for guiding the head in which it is inserted.

2. Squib according to claim 1, **characterised in that** it comprises four fins (15) distributed angularly and symmetrically in relation to the axis (3).

3. Squib according to claim 2, **characterised in that** each fin (15) is locked to the internal wall of the envelope and is in the form of a blade the edge (17) of which pointing towards the axis exhibits an oblique end (18) which diverges towards the exterior in relation to said axis.

4. Squib according to any one of the preceding claims, **characterised in that** the means (14) for centring are arranged so as to centre said igniter head in a predetermined position in the middle of the powder so that the quantity of powder around said head is equal on each side of said head.

5. Squib according to any one of the preceding claims, **characterised in that** the ends (10) of the limbs of the groove terminate in small plates (12) which reinforce the envelope and project from the external face (13) of the envelope.

6. Squib according to any one of the preceding claims, **characterised in that** the wall of the envelope (2) being of thickness e, the depth of the groove (9) is between e/2 and 2/3e.

7. Squib according to claim 6, **characterised in that** e is between 1.30 mm and 1.45 mm.

8. Squib according to any one of the preceding claims, **characterised in that** the envelope (2) is made of polyethylene with a Shore D hardness of between 50 and 60.

9. Squib according to any one of the preceding claims, **characterised in that** the plug (7) comprises an insert of glue (19) extending over between a fifth and a half of the length of the envelope facing a portion of said envelope having no groove.
